## Europäisches Patentamt

## European Patent Office

## Office européen des brevets

(19)

(11) Veröffentlichungsnummer: **0 021 291**
**A1**

(12) **EUROPÄISCHE PATENTANMELDUNG**

(21) Anmeldenummer: 80103324.2

(22) Anmeldetag: 13.06.80

(51) Int. Cl.³: **G 01 F 1/68,** G 01 K 13/02,
G 01 K 7/18

(30) Priorität: 27.06.79 DE 2925975

(43) Veröffentlichungstag der Anmeldung: 07.01.81
Patentblatt 81/1

(84) Benannte Vertragsstaaten: FR GB IT

(71) Anmelder: SIEMENS AKTIENGESELLSCHAFT Berlin
und München, Postfach 22 02 61,
D-8000 München 22 (DE)

(72) Erfinder: Kammermaier, Johann, Dr.rer.nat.,
Ziehrerstrasse 19, D-8025 Unterhaching (DE)
Erfinder: Müller, Rüdiger, Dr.Ing., Putzbrunner
Strasse 131, D-8000 München 83 (DE)
Erfinder: Rödl, Peter, Kaiserstrasse 20,
D-8200 Rosenheim (DE)

(54) **Mengendurchflussmesser.**

(57) Ein Mengendurchflussmesser, bei dem ein strömendes
Medium an zwei stromdurchflossenen elektrischen Leitern
vorbeigeführt wird, wobei die Stromerhöhung, die zum Aufrechterhalten des Temperaturunterschiedes zwischen den
beiden Leitern erforderlich ist, als Mass für die Durchflussmenge ausgewertet wird, wird dadurch besonders vielseitig
und für einen weiten Spannungsbereich einsetzbar, dass
die Widerstände (R1, R2) als dünne Widerstandsschichten
ausgebildet sind, welche auf einem dünnen Substrat (1)
aufgebracht sind.

EP 0 021 291 A1

SIEMENS AKTIENGESELLSCHAFT     Unser Zeichen
Berlin und München     VPA 79 P 1 1 0 8 EUR

Mengendurchflußmesser

Die vorliegende Erfindung betrifft einen Mengendurchflußmesser, bei dem ein strömendes Medium an zwei stromdurchflossenen elektrischen Leitern mit temperaturabhängigem Widerstand vorbeigeführt wird, bei dem der eine elektrische Leiter durch den elektrischen Strom aufgeheizt wird und als Meßwiderstand dient, während der zweite elektrische Leiter als Vergleichswiderstand dient und durch den elektrischen Strom nicht aufgeheizt wird, bei dem weitere elektrische Widerstände vorgesehen sind, die mit dem Meßwiderstand und dem Vergleichswiderstand zusammen eine Widerstandsmeßbrücke bilden, bei dem Einrichtungen zur elektronischen Steuerung des Brückenstromes in Abhängigkeit von der Spannung am Brückenabgriff vorgesehen sind, welche die Spannung am Brückenabgriff auf Null regeln, und bei dem die Änderung des Brückenstromes als Maß für die Menge des strömenden Mediums ausgewertet wird.

Ein derartiger Mengendurchflußmesser ist aus 'Bosch Technische Berichte 5(1975)1' bekannt. Dort werden der Ver-

Mhs 1 Lk / 19.6.1979

gleichswiderstand und der Meßwiderstand durch aufgespannte dünne Drähte gebildet. Dabei ist für den Vergleichswiderstand ein wesentlich dünnerer Draht erforderlich als für den Meßwiderstand, damit ein Vergleichswiderstand mit einem so hohen Widerstandswert erzeugt werden kann, daß er sich im Gegensatz zum Meßwiderstand durch den hindurchfließenden Strom nicht in störendem Maße erwärmt. Der Drahtstärke sind hierbei nach unten durch die notwendige mechanische Festigkeit der Drähte Grenzen gesetzt. Der Widerstand kann daher infolge der zu fordernden geringen Abmessungen des Durchflußmessers nicht so hoch gewählt werden, daß eine ausreichende Meßgenauigkeit erreicht wird. Die beispielsweise im Kraftfahrzeugbau erforderlichen Abmessungen von allenfalls wenigen Zentimetern ergeben so niedrige Widerstandswerte, daß die Brücke nur mit Spannungen bis größenordnungsmäßig 1V betrieben werden kann. Bei so kleinen Spannungen spielen z.B. in strömenden Flüssigkeiten bereits die kaum zu vermeidenden galvanischen Spannungen zwischen verschiedenen Teilen der Schaltung eine Rolle: Sie verfälschen bereits das Meßergebnis in unkontrollierbarer Weise. In strömenden Gasen, z.B. Luft, treten als Folge der niedrigen Widerstandswerte bereits bei einer Brückensspannung von 1V am Meßwiderstand Übertemperaturen um 200K auf, die den Meßwiderstand auf Dauer überlasten und für viele strömende Medien unzulässig sind. In dieser Hinsicht ungefährlich ist eine Übertemperatur bis 40K, die bei Widerstandsdrähten aber nur mit Brückenspannungen wesentlich unter 1V eingestellt werden kann, bei denen die Brücke ungenau arbeitet.

Die Aufgabe, die der vorliegenden Erfindung zugrundeliegt, besteht darin, daß ein Mengendurchflußmesser angegeben wird, der mit Spannungen betrieben werden kann, die einen störenden Einfluß von galvanischen Spannungen der Schaltungsteile ausschließen, und der eine ausreichende Meßgenauigkeit bei einer deutlich unter 200°C liegenden Übertemperatur ermöglicht.

Diese Aufgabe wird erfindungsgemäß dadurch gelöst, daß der Meßwiderstand und der Vergleichswiderstand als dünne Widerstandsschichten ausgebildet sind, welche auf ein dünnes Substrat aufgebracht sind.

Derartige Mengendurchflußmesser sind gegen Verschmutzung unempfindlicher als solche mit Drähten, da der Meßwiderstand und der Vergleichswiderstand eine vergleichsweise große Oberfläche aufweisen und eine bestimmte Verschmutzung sich auf einen größeren Bereich verteilt, wodurch die Messung weniger beeinflußt wird. Ihre Ansprechzeit ist wegen des großen Verhältnisses Oberfläche zu Dicke der Widerstandsschichten sehr kurz. Außerdem reicht eine sehr geringe Übertemperatur aus, um eine Stromänderung zu erhalten, die die Messung der Strömungsgeschwindigkeit mit der erforderlichen Genauigkeit ermöglicht. Da die Festigkeit der Widerstände nicht durch das Widerstandsmaterial bedingt ist, wie bei einem Aufbau mit Widerstandsdrähten gemäß dem Stand der Technik, können um ein Vielfaches höhere Widerstandswerte auf dem zur Verfügung stehenden geringen Platz untergebracht werden, so daß mit den vorhandenen Spannungen, in Kraftfahrzeugen beispielsweise 12V, die durchfließenden Mengen beispielsweise auf $\pm 2\%$ genau gemessen werden können.

Die Übertemperatur, auf die sich der Meßwiderstand gegenüber der Umgebungstemperatur aufheizt, liegt vorteilhaft bei 40K. Dadurch wird im Dauerbetrieb eine thermische Überlastung des Durchflußmessers vermieden und der Einsatz des Durchflußmessers zur Messung von strömenden Flüssigkeiten mit relativ geringem Siedepunkt ermöglicht.

Der Mengendurchflußmesser ist besonders für den Einsatz auf dem Kraftfahrzeugsektor geeignet. Er ermöglicht die kontinuierliche Messung der von Verbrennungsmotoren angesaugten Luft- und Kraftstoffmengen, die für eine elektronisch gesteuerte Kraftstoffluftdosierung notwendig sind. Er liefert zumindest im vorgeschriebenen Temperaturbereich von -35°C bis +150°C von der Temperatur des strömenden Mediums unabhängige Meßwerte. Seine Ansprechzeit, innerhalb der Strömungsänderungen bis auf den e-ten Teil erfaßt werden, liegt um zwei bis drei Zehnerpotenzen unter der Grenze der zulässigen Ansprechzeit von 5ms.

Für eine Durchflußmessung im Strömungszentrum ist es vorteilhaft, daß die beiden Widerstände hintereinander angeordnet sind. Soll ein größerer Strömungsquerschnitt von der Messung erfaßt werden, so sind der Meßwiderstand und der Vergleichswiderstand vorteilhaft nebeneinander und quer zur Strömungsrichtung angeordnet. Zur Kontaktierung der Widerstandsbahnen sind vorteilhaft Leiterbahnen partiell aufgedampft. Hierfür eignet sich besonders Kupfer, an welches Verbindungsdrähte bzw. Anschlußdrähte angelötet sind.

Der Meßwiderstand besitzt vorteilhaft einen kleinen Widerstandswert, während der Vergleichswiderstand einen großen Widerstandswert besitzt. Dadurch entsteht beim Anschluß der gemeinsamen Spannungsquelle im Vergleichswiderstand eine verschwindend geringe Erwärmung, so daß dieser seinen Wert nicht in Abhängigkeit von der Durchflußmenge ändert.

Eine hohe Widerstandsänderung bei Wärmeentzug durch die Strömung wird durch die Ausbildung des Meßwiderstandes aus Nickel erreicht. Der Widerstandswert des Meßwider-

0021291

standes ist vorteilhaft um zumindest den Faktor 10 kleiner als der des Vergleichswiderstandes. Der Vergleichswiderstand wird vorteilhaft aus einer mäanderförmigen Metallschicht gebildet, insbesondere wenn die Längenausdehnung des Vergleichswiderstandes nicht größer sein soll als die des Meßwiderstandes. Dabei bestehen der Vergleichswiderstand und der Meßwiderstand vorteilhaft aus demselben Material. So wird der Temperatureinfluß auf einfache Weise kompensiert.

Wegen der kurzen Ansprechzeit des vorgeschlagenen Mengendurchflußmessers ist es möglich und zweckmäßig, die Widerstandsschichten zur Vermeidung von Schmutzablagerungen mit einer dünnen, beispielsweise 0,5 µm bis 1 µm dicken, Lackschicht aus einem antiadhäsiven Stoff, vorzugsweise aus einem Silikonharz, zu überziehen. Eine derartige Schutzschicht vergrößert die Ansprechzeit nur unwesentlich, beispielsweise bei einer 25 nm dicken Nickelwiderstandsschicht von $10^{-6}$ s auf $5 \times 10^{-6}$ s, die Ansprechzeit kommt also nicht in die Größenordnung der für sie zulässigen Grenze.

Die Temperatur des strömenden Mediums wird bei dem vorgeschlagenen Verfahren durch das Brückenprinzip zwar grundsätzlich eliminiert, sie geht aber indirekt in die Übertemperatur ein. Zur Ausschaltung dieses Einflusses muß der der Brücke zugeführte Strom mit der Temperatur variiert werden. Soll dazu die Temperatur des strömenden Mediums direkt erfaßt werden, so wird hierfür vorteilhaft ein temperaturabhängiger Widerstand verwendet. Dieser Widerstand wird mit einem konstanten niedrigen Strom belastet, der den Widerstand nicht erhöht, so daß der Spannungsabfall an diesem Widerstand ein Maß für die Temperatur ist. Dieser zusätzliche Widerstand ist vorteilhaft aus einer aufgedampften Metallschicht herausgearbeitet, aus der auch der Meßwiderstand und der Vergleichswiderstand herausgearbeitet sind, und liegt in einem eigenen, vom Brückenstrom unabhängigen Stromkreis.

Eine rationelle Serienfertigung der Widerstände ist durch eine Ausführungsform gegeben, bei der der Meßwiderstand und der Vergleichswiderstand auf eine dünne Trägerfolie als Substrat aufgebracht und miteinander einstückig verbunden sind und in der die dünne Trägerfolie auf eine Versteifung aufgeklebt ist. Die Widerstände können durch ein bekanntes Folienbedampfungsverfahren im Bandverfahren hergestellt sowie mit Fotoätz- oder Siebdruckabhebetechniken strukturiert und erst kurz vor der Fertigstellung mit der Versteifung verklebt werden. Das Verhältnis Breite zu Dicke der Widerstandsschicht des Meßwiderstandes ist vorteilhaft zumindest 10:1, um eine kurze Ansprechzeit zu erreichen.

Die Versteifung weist zumindest im Bereich der Widerstandsschichten Durchbrüche auf, wobei die verbleibenden Teile der Versteifungen einen Rahmen bilden und die dünne Trägerfolie auf diesen Rahmen gespannt ist. Dadurch weist die unmittelbare Unterlage der Widerstände eine vergleichsweise geringe Wärmekapazität auf, so daß die zur Strömungsmessung erforderlichen Übertemperaturen im Meßwiderstand schon mit vergleichsweise schmalen (z.B. 0,5mm breiten) Bahnen desselben und entsprechend niedrigen ihn durchfließenden Strömen ($\leqq$0,05A) erzeugt werden können. Die notwendige mechanische Festigkeit des Mengendurchflußmessers wird durch diese fensterartige Form der Versteifung voll gewährleistet.

Um eine gegenseitige Beeinflussung von Meßwiderstand und Vergleichswiderstand zu vermeiden, ist die Trägerfolie mit der dünnen Widerstandsschicht zwischen dem Meßwider-

stand und dem Vergleichswiderstand mit einem Mittelsteg als Wärmesenke stoffschlüssig verbunden. Der Mittelsteg kann eine auf die Widerstandsschicht unmittelbar aufgedampfte Metallschicht sein, die gleichzeitig als Kontaktfläche verwendet werden kann. Er kann auch, ggf. zusätzlich, durch einen Steg der Versteifung oder durch einen aufgeklebten Kunststoffbügel gebildet sein.

Die Erfindung wird anhand von vier Figuren näher erläutert. Sie ist nicht auf die in den Figuren gezeigten Beispiele beschränkt.

Fig. 1 zeigt ein Schaltbild einer vorgeschlagenen Meßbrücke schematisch.

Fig. 2 zeigen verschiedene Ausführungsformen und Anordbis 4 nungen von Meßwiderstand, Vergleichswiderstand und ggf. Temperaturmeßwiderstand.

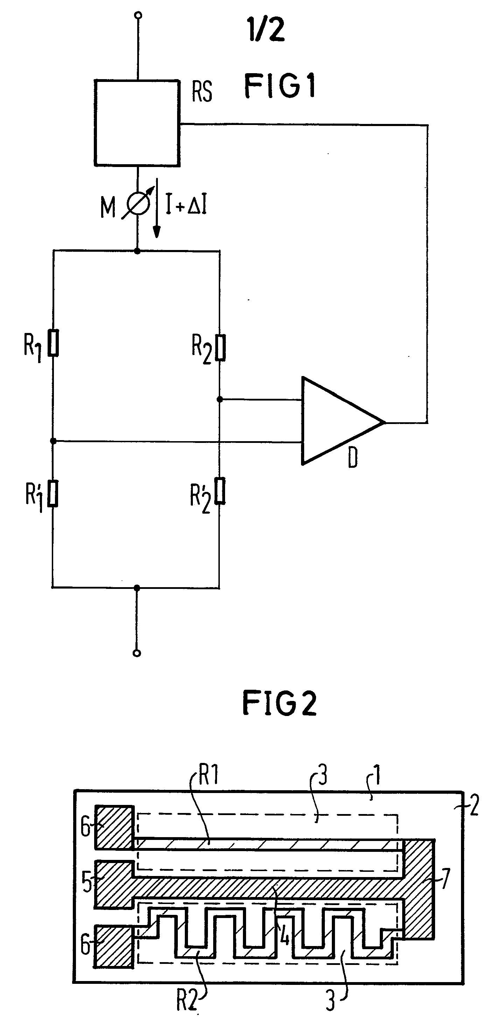

Im Schaltbild gemäß Fig. 1 ist eine Brücke aus den Widerständen R1, R2, R1', R2' aufgebaut. Ein Differenzverstärker D bewirkt über eine Reglerschaltung RS einen Brückenabgleich durch Änderung des Brückenstromes I um den Differenzstrom $\Delta$ I. Ein Meßgerät M zeigt den Differenzstrom $\Delta$ I bzw. die diesem Differenzstrom $\Delta$ I entsprechende Durchflußmenge des strömenden Mediums an.

In den Fig. 2 bis 4 sind die Widerstandsbahnen weit schraffiert und die Zuleitungsbahnen und Kontaktflächen eng schraffiert dargestellt.

Gemäß Fig. 2 sind der Meßwiderstand R1 und der Vergleichswiderstand R2 nebeneinander angeordnet. Sie befinden sich auf einem dünnen Substrat 1, welches vorzugsweise aus einer Kunststoffolie besteht. Dieses Substrat 1 ist mit einer Versteifung 2 stoffschlüssig verbunden. Die Ver-

0021291

steifung 2 enthält Ausnehmungen 3 im Bereich der Widerstände R1 und R2. Durch diese Ausnehmungen 3 werden sehr kurze Ansprechzeiten des Mengendurchflußmeßgerätes erreicht. Die Stromzuleitung erfolgt über eine Kontaktfläche 5, eine auf dem Mittelsteg 4 befindliche Leiterbahn und eine Kontaktfläche 7. Der Mittelsteg 4 verhindert eine gegenseitige thermische Beeinflussung der Widerstände R1 und R2. Der Mittelsteg 4 besteht aus einem Steg in der Versteifung, dem darüberliegenden Teil des Substrats 1 und der darauf aufgebrachten Leiterbahn für die Zuleitung des Stromes. Diese Ausführungsform kann relativ klein ausgebildet werden und ist besonders zur Anordnung quer zur Strömungsrichtung des Mediums geeignet. Sie erfaßt dadurch einen großen Teil des Strömungsquerschnittes. Alle Anschlüsse 5 und 6 können auf einer Seite abgegriffen werden.

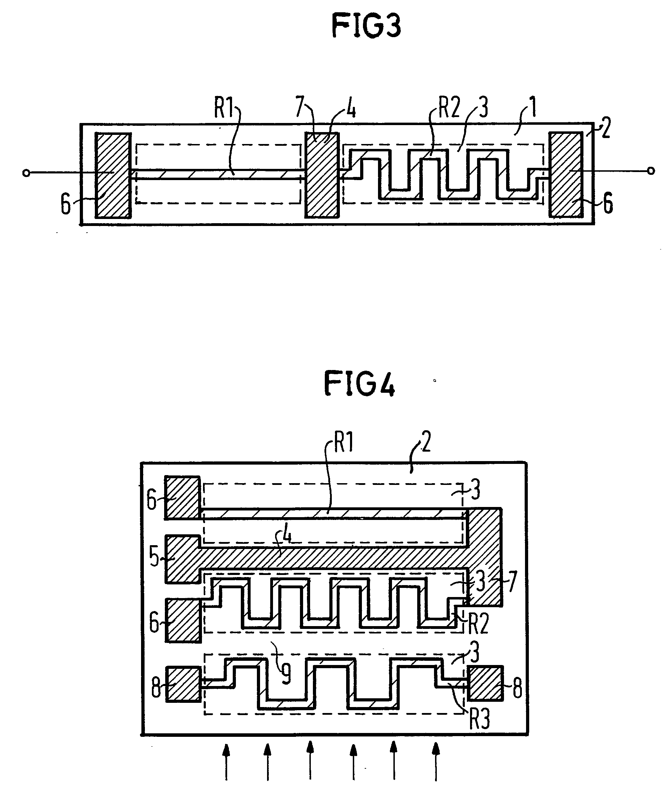

Im Beispiel gemäß Fig. 3 sind die Widerstände R1 und R2 hintereinander angeordnet. Der Mittelsteg 4 verhindert wiederum eine gegenseitige thermische Beeinflussung der Widerstände R1 und R2. Er stellt gleichzeitig die Kontaktfläche 7 dar, die die beiden Widerstände miteinander verbindet. Der Brückenabgriff erfolgt über die Kontaktfläche 6.

Das Beispiel gemäß Fig. 4 ist entsprechend dem Beispiel von Fig. 2 aufgebaut, jedoch durch einen Widerstand R3 zur Temperaturkompensation ergänzt. Auch der Widerstand R3 liegt über einer Ausnehmung 3 in der Versteifung 2. Die Anschlüsse 8 des Widerstandes R3 sind von den Anschlüssen 5 und 6 galvanisch getrennt. Die Strömungsrichtung des strömenden Mediums entspricht vorzugsweise der Pfeilrichtung. Mittelstege 4 und 9 verhindern eine störende gegenseitige thermische Beeinflussung der Widerstände R1, R2 und R3.

12 Patentansprüche, 4 Figuren

Patentansprüche

1. Mengendurchflußmesser, bei dem ein strömendes Medium an zwei stromdurchflossenen elektrischen Leitern mit temperaturabhängigem Widerstand vorbeigeführt wird, bei dem der eine elektrische Leiter durch einen elektrischen Strom aufgeheizt wird und als Meßwiderstand dient, während der zweite elektrische Leiter als Vergleichswiderstand dient und durch den elektrischen Strom nicht aufgeheizt wird, bei dem weitere elektrische Widerstände vorhanden sind, die mit dem Meßwiderstand und dem Vergleichswiderstand zusammen eine Widerstandsmeßbrücke bilden und in welchem Einrichtungen zur elektronischen Steuerung des Brückenstromes in Abhängigkeit von der Spannung am Brückenabgriff vorgesehen sind, welche die Spannung am Brückenabgriff verschwinden lassen und bei dem die Änderung des Brückenstromes als Maß für die Menge des strömenden Mediums ausgewertet wird, d a d u r c h   g e k e n n z e i c h n e t,  daß der Meßwiderstand (R1) und der Vergleichswiderstand (R2) als dünne Widerstandsschichten ausgebildet sind, welche auf ein dünnes Substrat (1) aufgebracht sind.

2. Mengendurchflußmesser nach Anspruch 1, d a d u r c h   g e k e n n z e i c h n e t,  daß der Meßwiderstand (R1) einen kleinen, der Vergleichswiderstand (R2) aber einen großen Widerstandswert besitzt.

3. Mengendurchflußmesser nach einem der Ansprüche 1 oder 2, d a d u r c h   g e k e n n z e i c h n e t,  daß der Meßwiderstand (R1) aus Nickel besteht.

4. Mengendurchflußmesser nach einem der Ansprüche 2 oder 3, d a d u r c h   g e k e n n z e i c h n e t,  daß der Meßwiderstand (R1) einen um zumindest den Faktor 10 kleineren Widerstandswert aufweist als der Vergleichswiderstand (R2).

5. Mengendurchflußmesser nach Anspruch 2, d a d u r c h
g e k e n n z e i c h n e t, daß der Vergleichswiderstand (R2) durch eine mäanderierte Metallschicht gebildet ist.

6. Mengendurchflußmesser nach einem der Ansprüche 1 bis
5, d a d u r c h g e k e n n z e i c h n e t, daß der
Meßwiderstand (R1) und der Vergleichswiderstand (R2) aus
demselben Metall bestehen, auf eine dünne Trägerfolie
als Substrat (1) aufgebracht und miteinander einstückig
verbunden sind und daß die dünne Trägerfolie auf eine
Versteifung (2) aufgeklebt ist.

7. Mengendurchflußmesser nach einem der Ansprüche 1 bis
6, d a d u r c h g e k e n n z e i c h n e t, daß die
Widerstandsschicht des Meßwiderstandes (R1) ein Verhältnis von Breite zu Dicke von zumindest 10:1 besitzt.

8. Mengendurchflußmesser nach einem der Ansprüche 6 oder
7, d a d u r c h g e k e n n z e i c h n e t, daß die
Versteifung (2) zumindest im Bereich der Widerstandsschichten Durchbrüche (3) aufweist, daß die verbleibenden Teile der Versteifung (2) einen Rahmen bilden und daß
die dünne Trägerfolie auf diesen Rahmen gespannt ist.

9. Mengendurchflußmesser nach einem der Ansprüche 7 bis
8, d a d u r c h g e k e n n z e i c h n e t, daß die
Trägerfolie mit der dünnen Widerstandsschicht zwischen
dem Meßwiderstand (R1) und dem Vergleichswiderstand (R2)
mit einem Mittelsteg (4) stoffschlüssig verbunden ist.

10. Mengendurchflußmesser nach einem der Ansprüche 1 bis 9, d a d u r c h   g e k e n n z e i c h n e t, daß die Widerstandsschichten mit einem antiadhäsiven Stoff überzogen sind.

11. Mengendurchflußmesser nach Anspruch 10, d a d u r c h   g e k e n n z e i c h n e t, daß die Widerstandsschichten mit Silikonharz überzogen sind.

12. Mengendurchflußmesser nach einem der Ansprüche 1 bis 11, d a d u r c h   g e k e n n z e i c h n e t, daß das dünne Substrat eine Kunststoffolie ist und daß dieses so in den Weg für das strömende Medium eingesetzt ist, daß beim Betrieb eine mechanische Flatterbewegung des Substrats erfolgt.

FIG1

FIG2

FIG3

FIG4

Europäisches
Patentamt

**EUROPÄISCHER RECHERCHENBERICHT**

0021291

Nummer der Anmeldung

EP 80 10 3324

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 302 615 (MAX-PLANCK G.S. ZUR FÖRDERUNG DER WISSENSCHAFTEN E.V.)<br><br>  * Figuren 1-3; Seite 6, 2e und 3e Abschnitt; Seiten 7,8 *<br><br>-- | 1,5,8 12 |
| | US - A - 3 748 174 (A.C.M. CHEN et al.)<br><br>  * Figur 2; Spalte 5, Zeilen 3-35 *<br><br>-- | 1,3,5 |
| | US - A - 3 991 613 (M.D.W. ADLER et al.)<br><br>  * Spalte 4, Zeilen 4-13 *<br><br>-- | 1,11 |
| A | DE - A - 2 029 065 (METTLER IN-STRUMENTE A.G.)<br><br>  * Figuren 1,2 *<br><br>-- | 1,5 |
| A | DE - A - 1 904 029 (W.K. MULLER)<br>  * Figuren; Seite 4 *<br><br>-- | 1 |
| A | US - A - 3 352 154 (R.S. DJORUP)<br>  * Figuren 1-5 *<br><br>-- | 1 |
| A | US - A - 3 996 799 (A.F.P. VAN PUTTEN)<br><br>  * Figuren 1-3 *<br><br>--     ./. | 1,12 |

**KLASSIFIKATION DER ANMELDUNG (Int. Cl.³)**

```
G 01 F   1/68
G 01 K  13/02
         7/18
```

**RECHERCHIERTE SACHGEBIETE (Int. Cl.³)**

```
G 01 F   1/68
G 01 K  13/02
         7/18
G 01 P   5/10
         5/12
H 01 C   7/00
```

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-10-1980 | THIBO |

EPA form 1503.1   06.78

Europäisches
Patentamt

**EUROPÄISCHER RECHERCHENBERICHT**

00 21291

Nummer der Anmeldung

EP 80 10 3324

-2-

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|-----------|-----------|-----|-----|
| | **EINSCHLÄGIGE DOKUMENTE** | | |
| A | US - A - 3 498 127 (A.M. RICHARDS) *Figuren 1-17 * | 1 | |
| | ----- | | |
| | | | **RECHERCHIERTE SACHGEBIETE (Int. Cl. 3)** |

EPA Form 1503.2   06.78